# EUROPEAN PATENT APPLICATION

(11) **EP 4 611 409 A1**
(43) Date of publication of application: **03.09.2025**
(21) Application number: 24160573.2
(22) Date of filing: 29.02.2024
(51) Int. Cl.: H04W 8/20, H04W 48/02

(54) **A TELECOMMUNICATIONS SYSTEM AND A METHOD OF OPERATING THE TELECOMMUNICATIONS SYSTEM**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method (400) of operating a telecommunications system (100), the method comprising the steps of: providing a Communication Node (120), CN, configured to: store an embedded Subscriber Identification Module (eSIM) profile for accessing a Cellular Telecommunications Network (130), CTN; and communicate with a User Equipment (110), UE, over a wireless local connection (180-1); communicating, from the CN, to the UE, over the wireless local connection, the eSIM profile (420); receiving, at the CTN, from the UE using the eSIM profile, alan: request for a service plan; identifier of the communicated eSIM profile; and unique identifier associated with UE, other than the identifier of the eSIM profile (430); determining, at the CTN, the UE to be (440): eligible to receive the service plan in response to identifying, as stored in the CTN, an absence of an association between the unique identifier with prior provision of the requested service plan by the CTN; and ineligible to receive the service plan in response to identifying, as stored in the CTN, an association between the unique identifier and prior provision of the requested service plan; and in response to determining that the UE is: eligible, the CTN permitting the identified eSIM profile to access to the requested service plan (460); and not eligible, the CTN preventing the identified eSIM profile from accessing to the requested service plan (450). Further methods and systems are disclosed.

## Description

### Field of Invention

The present invention relates to a telecommunications system, and to a method of operating said system.

### Background

Subscriber access to network services provided by a cellular telecommunications network is controlled by a Subscriber Identity/Identification Module (SIM).

SIMs are available digitally - rather than physically - in the form of embedded-SIMs (eSIMs). Such eSIMs allow users greater flexibility in collecting, storing, and managing different subscriptions. Typically, an eSIM profile is retrieved from the Internet so as to provide an eSIM; however, access to the Internet may not always be available.

A network operator of a cellular telecommunications network may offer promotional service plans, for example to help entice new subscribers, for goodwill, and/or to help facilitate subsequent purchase of a non-promotional service plan. Such promotional service plans may include a free upfront allowance of network services, such as a pre-defined limited volume of free calls, SMS and/or mobile data.

However, access to such promotional service plans may be abused by users seeking to obtain more than an intended fair share of the promotional service plans.

Furthermore, predefined promotional service plans may not be suitable or optimal for all, including the operator and/or users, which can result in, at least, inefficient utilisation of network resources.

It is an aim of the present invention to at least alleviate some of the aforementioned problems.

### Statements of Invention

According to a first aspect of the present invention, there is provided: a method of operating a telecommunications system, the method comprising the steps of: providing a Communication Node (CN) configured to: store an embedded Subscriber Identification Module (eSIM) profile for accessing a Cellular Telecommunications Network (CTN); and communicate with a User Equipment (UE) over a wireless local connection; communicating, from the CN, to the UE, over the wireless local connection, the eSIM profile; receiving, at the CTN, from the UE using the eSIM profile, a/an: request for a service plan; identifier of the communicated eSIM profile; and unique identifier associated with UE, other than the identifier of the eSIM profile; determining, at the CTN, the UE to be: eligible to receive the service plan in response to identifying, as stored in the CTN, an absence of an association between the unique identifier with prior provision of the requested service plan by the CTN; and ineligible to receive the service plan in response to identifying, as stored in the CTN, an association between the unique identifier and prior provision of the requested service plan; and in response to determining that the UE is: eligible, the CTN permitting the identified eSIM profile to access to the requested service plan; and/or not eligible, the CTN preventing the identified eSIM profile from accessing to the requested service plan.

According to another aspect of the invention, there is provided a method of operating a telecommunications system, the method comprising the steps of: providing a Communication Node (CN) configured to: communicate with a Cellular Telecommunications Network (CTN); store an embedded Subscriber Identification Module (eSIM) profile for accessing the CTN; and communicate with a User Equipment (UE) using a wireless local connection; receiving, at the CN, from the UE, over the wireless local connection, a unique identifier associated with UE; communicating, by the CN to the CTN: a request for a service plan; an identifier of the stored eSIM profile; and the received unique identifier; determining, at the CTN, the UE to be: eligible to receive the service plan in response to identifying, as stored by the CTN, an absence of an association between the unique identifier with prior provision of the requested service plan by the CTN; and ineligible to receive the service plan in response to identifying, as stored by the CTN, an association between the unique identifier and prior provision of the requested service plan; and in response to determining that the UE is: eligible: the CTN permitting the identified eSIM profile to access to the requested service plan; and communicating, by the CN to the UE, via the wireless local connection, the identified eSIM profile; and/or ineligible: the CTN preventing the identified eSIM profile from accessing the requested service plan; and/or preventing the CN from communicating the identified eSIM profile to UE.

Optionally, the CN is configured to communicate with the cellular network; this may be performed via a non-cellar network (e.g. fixed access) or a cellular network (including the cellular network). Optionally, the CN is disconnected from the cellular network.

As used herein, prior, with reference to provision of the requested service plan, preferably connotes at a point in time before commencement of the method (at least, after establishing the wireless local connection), and may comprise a previous iteration of said method.

Optionally, prior provision of the requested service plan by the CTN comprises: permitting access to a service plan by the UE, in which said service plan may be (substantially) identical to the requested service plan. Optionally, the steps of determining the UE to be eligible and ineligible is performed by a core of the cellular network, and may be performed by an Access and mobility Management Function (AMF), Mobility Management Entity (MME), Home Subscriber Server (HSS), and/or Visiting Location Register (VLR). Preferably, the requested service plan comprises a: network service; cost; and restrictions to the network services. Optionally, in response to determining that the UE is ineligible, the CTN permitting the identified eSIM profile to access an alternative service plan, wherein said alternative service plan may comprise more restrictions and/or fewer permitted network services (and/or at a greater cost) than the requested service plan.

Preferably, the network service comprises: mobile data services; voice services; messaging services; location services; and/or network technologies or functionality. Optionally, the network technologies and/or functionality comprises: access to a network slice; private network access; radio access technology; and/or quality of service. Optionally, the restrictions provide a limited allowance of: messages, calls, and/or mobile data. Optionally, said allowance may be limited as to: volume or quantity; quality; duration; and/or spatial or geographic availability (e.g. a geofencing allowance). Optionally, excepting use of the eSIM profile by the UE, the CTN is a visited network for the UE and/or the UE is a non-subscriber of the CTM, any CTN accessible proximate to the CN, and/or any CTN whatsoever. Optionally, the UE and CN communicate without the CN providing the UE access to a wide area network, including the Internet. Preferably, the wireless local connection: utilises pairing-based connection and/or inductive communication; is generated and maintained by the CN; is credential-less or open; non-cellular; comprises a Wireless Local Area Network (WLAN), such as a Bluetooth or Wi-Fi network; and/or comprises a Personal Area Network (PAN), such as a Near-Field Communication (NFC) network. Optionally, the wireless local connection conforms with ISO/IEC 18092, ISO/IEC 23917, ISO/IEC 22536, ISO/IEC 28361, ISO/IEC 21481 and/or ISO/IEC 14443. Optionally, the wireless connection comprises at least one instance of NFC. Preferably, the unique identifier associated with the UE is: universally unique; unique to the UE; immutable or tamper-proof; trusted; a device or hardware identifier, such as an International Mobile Equipment Identity (IMEI); an embedded Universal Integrated Circuit Card (eUICC) identifier; an Electronic Serial Number (ESN); a non-cellular network identifier, such as a Media Access Control (MAC) address; and/or a Mobile Equipment IDentifier (MEID); and/or a cellular network identifier, for other than the CTN, such as an International Mobile Subscriber Identity (IMSI), a Mobile Station International Subscriber Directory Number (MSISDN), a telephone number. Preferably, the eSIM profile identifier comprises an eUICC identifier. Preferably, in response to determining that the UE is eligible, the CTN communicating said eligibility to the CN. Preferably, in response to receiving said communicated eligibility, the CN causes: communication of the eSIM profile to the UE; and/or deletion of the eSIM profile from the CN.

Preferably, the prior provision of the requested service plan is within a predefined period of time. Optionally, said period is: for all time; or within a limited period of time, such as a/an: hour; day; week; month; or year.

Preferably, in response to determining that the UE is eligible and/or permitting the identified eSIM profile access to the requested service plan, the CTN subsequently storing an association between the unique identifier and the requested service plan as prior provision of said service plan. Optionally, said storing is performed, additionally or alternatively, in response to the CN communicating the identified eSIM profile to the UE. Optionally, the CTN further records subsequent use of the requested service plan by the eSIM profile in association with the unique identifier. Optionally, the method further comprises the step of, prior to receiving at the CTN the request for the service plan, recording, at the CTN, the identifier of the eSIM profile and associating said identifier with the service plan, and wherein the request for the service plan comprises identifying the service plan already associated with the eSIM profile. That is, the requested service plan may be predefined by the CTN in association with the identifier of the eSIM profile.

Preferably, the service plan is a promotional service plan. Optionally, the promotional service plan is provided at a discounted cost compared to an alternative non-promotional service plan (all else being equal), and said discounted price may render the promotional service plan free. Optionally, the promotional service plan is provided at a discounted price per a given unit of allowance compared to a non-promotional service plan. The promotional service plan may be provided in the absence of the CN and/or CTN receiving any payment and/or payment information from the UE and/or a user thereof.

Preferably, the method further comprises the step of the CN requesting, and subsequently receiving, the eSIM profile from an eSIM server, said server being configured to configure and provide the eSIM profile.

Preferably, the method further comprises the steps of: communicating, from the UE to the CN over the wireless local connection, context data associated with the UE, in which said context data is indicative of a state of the UE and/or a user associated with the UE; communicating, by the CN to the CTN, the context data; and the CTN configuring the requested service plan in dependence upon the context data. Preferably, the context data comprises a/an: hardware and/or software state of the UE; sensor reading; and/or user data. The context data may comprise a/an: device manufacturer; operator; type descriptor (e.g. a Manufacturer Usage Description file); model, battery level; operating system; application type and/or version; a measure of wireless congestion; sensed location information; and/or user account information. Preferably, configuring the requested service plan comprises selecting a/an: cost; permitted network service; and/or restriction. Preferably, the service plan is configured so as to select an improved network service, a lower cost, and/or fewer restrictions, where the context data is indicative of the UE having: having no roaming access to the CTN; no access to the Internet; low battery; an inclement local weather environment; and/or located in a pre-defined location.

According to another aspect of the invention there is provided a computer-readable carrier medium comprising a computer program, which, when the computer program is executed by a computer, causes the computer to carry out the methods described above.

According to yet another aspect of the invention, there is provided a telecommunications system comprising a: Cellular Telecommunications Network (CTN); and Communication Node (CN) configured to: store an embedded Subscriber Identification Module (eSIM) profile for accessing the Cellular Telecommunications Network (CTN); and communicate with a User Equipment (UE) over a wireless local connection so as to send the eSIM profile to the UE; and wherein the CTN is configured to: receive, from the UE using the eSIM profile, a/an: request for a service plan; identifier of the communicated eSIM profile; and unique identifier associated with UE, other than the identifier of the eSIM profile; and determine, the UE to be: eligible to receive the requested service plan in response to identifying, as stored in the CTN, an absence of an association between the unique identifier with prior provision of the requested service plan by the CTN; and ineligible to receive the service plan in response to identifying, as stored in the CTN, an association between the unique identifier and prior provision of the requested service plan; and in response to determining that the UE is: eligible, permit the identified eSIM profile to access to the requested service plan; and not eligible, prevent the identified eSIM profile from accessing to the requested service plan.

According to yet another aspect of the invention, there is provided a telecommunications system comprising a: Cellular Telecommunications Network (CTN); and Communication Node (CN) configured to: store an embedded Subscriber Identification Module (eSIM) profile for accessing the CTN; communicate with the Cellular Telecommunications Network (CTN); and communicate with a User Equipment (UE) using a wireless local connection; wherein said system is configured to: receive, from the UE, at the CN, and over the wireless local connection, a unique identifier associated with UE; communicate, by the CN to the CTN: a request for a service plan; an identifier of the stored eSIM profile; and the received unique identifier; determine, at the CTN, the UE to be: eligible to receive the requested service plan in response to identifying, as stored by the CTN, an absence of an association between the unique identifier with prior provision of the requested service plan by the CTN; and ineligible to receive the service plan in response to identifying, as stored by the CTN, an association between the unique identifier and prior provision of the requested service plan; and in response to determining that the UE is: eligible: the CTN being configured to permit the identified eSIM profile to access to the requested service plan; and the CN being configured to communicate, to the UE, via the wireless local connection, the identified eSIM profile; and ineligible: the CTN being configured to prevent the identified eSIM profile from accessing the requested service plan; and/or the CN being configured to prevent communication of the identified eSIM profile to UE. Optionally, the CN does not form a part of the CTN.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a telecommunications system, a communication node and methods of operating said system and node, as described herein and/or substantially as illustrated with reference to the accompanying drawings. The present invention is now described, purely by way of example, with reference to the accompanying diagrammatic drawings, in which:
Figure 1 is a schematic telecommunications system;
Figure 2 is a schematic of a communication node of the system;
Figure 3 shows a first exemplary process for operating the system;
Figure 4 shows a second exemplary process for operating the system; and
Figure 5 shows a third exemplary process for operating the system.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

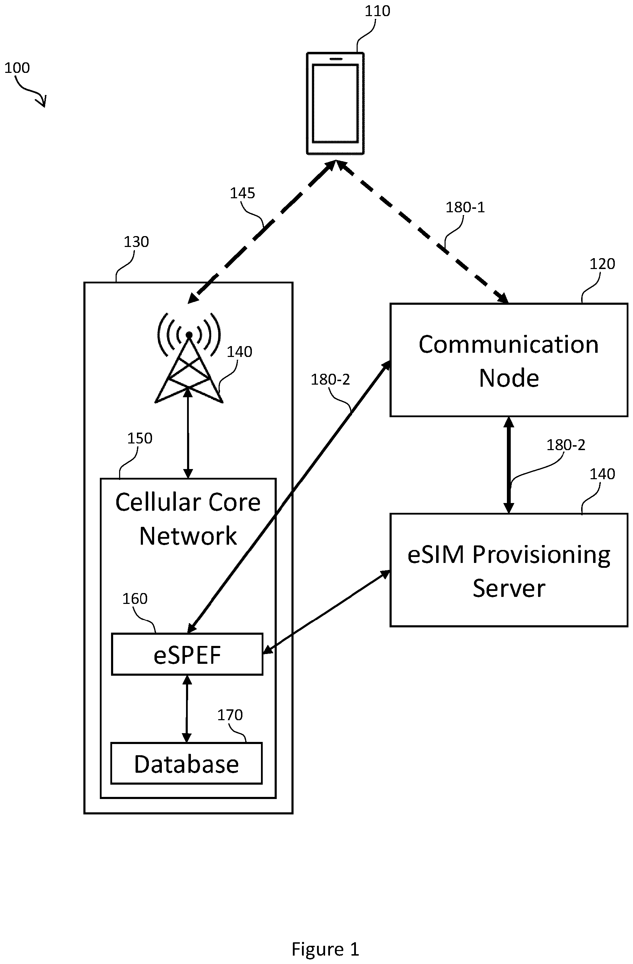

Figure 1 is a schematic diagram of a telecommunications system 100 comprising a/an: User Equipment 110 (UE); Communication Node 120 (CN); Cellular Telecommunications Network 130 (CTN); and eSIM Provisioning Server 140 (ePS).

The UE 110 is in the form of wireless telecommunications device suitable for communicating with the CTN, and is, for example, in the form of a mobile phone, smartphone, tablet, laptop, PC, and/or Internet of Things (IoT) device. The UE comprises an embedded Universal Integrated Circuit Card (eUICC), and is configured to receive an eSIM profile and to install said profile onto the eUICC, thereby rendering the UE capable of utilising at least one eSIM so as to access the CTN 130.

The UE 110 stores, and is configured to retrieve and communicate, UE information. The UE information comprises a unique identifier and/or UE context data.

The unique identifier is a network and/or hardware identifier of the UE. For improved security, the unique identifier is universally unique, trusted, immutable, intelligible to the CTN 130, and has a one-to-one mapping with the UE 110, and is therefore in the form of a/an:
- International Mobile Equipment Identity (IMEI); and/or
- International Mobile Subscriber Identity (IMSI) associated with the 130, or another, CTN.

However, where lesser security is appropriate (at least as deemed by an operator of the system 100), the trusted and/or immutable characteristics of the unique identifier are foregone. In this example, the unique identifier is in the form of a Media Access Control (MAC) address.

The UE context data indicates a state of the UE, including a measurement of a local environment of the UE, and/or a user associated with the UE, and, for example, comprises a/an:
- hardware state of the UE (*e.g.* device manufacturer, operator, type; model, *etc*.);
- software state of the UE (*e.g.* operating system and/or application type or version, *etc*.);
- a sensor reading (*e*.*g*. battery level, measure of wireless signal strength and/or congestion from a wireless interface of the UE, location, *etc*.); and/or
- user data (*e*.*g*. user account information, personal information, *etc*.).

The CTN 130 is a wide-area mobile telecommunications network configured to operate according to, for example, 2G, 3G, LTE, 4G, and/or 5G standards as defined by the 3GPP^{RTM}. The CTN is operated by a Mobile Network Operator (MNO), which may include a Mobile Virtual Network Operator.

The CTN 130 comprises a Radio Access Network (RAN) comprising at least one radio access point 140 (*e.g.* in the form of a macro-, micro-, pico- or femto-cell site/s) for establishing a cellular connection 145 with the UE 110. The CTN further comprises a core network 150.

In addition to core network functions and interfaces provided as part of 3GPP standards-compliant cellular networks, the core network comprises an eSIM Service Plan Eligibility Function 160 (eSPEF) and a database 170. The eSPEF and database are available to be stand-alone functions within the core network, or to form a part of at least one of the following core network functions (not shown for conciseness): Access and mobility Management Function (AMF); Mobility Management Entity (MME), Home Subscriber Server (HSS), and Visiting Location Register (VLR).

The CTN 130 is accessible using an eSIM. Accordingly, the core network 150 comprises functionality to generate configuration data (*e*.*g*. an Integrated Circuit Card IDentifier (ICCID) and a network authentication key) for providing and eSIM profile for provisioning an eSIM to access the CTN as a subscriber, and, subject to permission, subsequently to utilise a network service provide by the CTN. A network service comprises:
- mobile data services, such as mobile data/broadband;
- voice services, such as voice calling using Voice-over-LTE (VoLTE), Voice-over-Wi-Fi (VoWiFi), and voicemail services;
- text and/or media messaging services, such as a Short Message Service (SMS) and/or a Multimedia Messaging Service (MMS);
- location services, such as positioning (*e*.*g*. Enhanced Cell-ID) and location-based services; and/or
- network technologies, such as radio access technology (*e*.*g*. LTE or New Radio) and network functionality (*e*.*g*. network slicing and Ultra-Reliable Low Latency Communications).

Network services are provided to a subscriber in accordance with permissions associated with a service plan (or "contract"). A service plan specifies: permitted network services; cost for the permitted network service; and restrictions for the permitted network services, such as exclusions, rules, conditions, allowances and/or limits.

Service plans are of a promotional or a non-promotional type. A promotional service plan effectively provides a network service at a discounted cost (including a 100% discount) to a subscriber compared to a non-promotional type (all else being equal).

A promotional service plan may be offered by an MNO to incentivise new subscriptions, for goodwill, and/or to help facilitate subsequent purchase of a non-promotional service plan. As such, given its concessionary nature, a promotional service plan typically has a more limited intended distribution compared to a non-promotional service plan, for example such that a given user may only ever use a given promotional service plan once.

A full-discount promotional service plan (or a "free service plan") may be provided such that a subscriber bears no cost for accessing the permitted network service of said plan. For example, initially, a subscriber may be entitled to a free service plan permitting mobile data services for up to 1 hour from commencement (*i*.*e*. a temporal restriction), up to 1Gb (*i.e.* a volume restriction), and for accessing only specific data network resources (*e*.*g*. specific Internet websites or domains).

A free service plan may be provided as part of a so-called "*get you going*" allowance, which provides, cost-free, a network service that permits - and foregoes restrictions that prevent - subsequent purchase of a non-promotional service plan (*e.g.* by texting, calling and/or using mobile data to access a website associated with the MNO). In particular, a "*get you going*" allowance may be made available to a subscriber without the MNO having to request and receive payment information, and may instead be made available unconditionally to new eSIMs.

Given the cost-benefit of promotional service plans for a user - and in particular free service plans - compared to non-promotional service plans, a user may seek to abuse offerings of promotional service plans, and in particular chain together multiple separate "*get you going*" allowances by retrieving and serially using multiple new SIMs (which may themselves be provided at no cost or unconditionally). Given the ease with which multiple eSIMs can be swapped-in and -out of a UE (at least compared to a physical SIM), this abuse is made all the easier with eSIMs.

More generally, and beyond promotional service plans, the MNO may wish to impose restrictions on the distribution of certain service plans.

Accordingly, the eSPEF is configured to assess whether, and to what extent, the UE 110 is eligible for a given service plan, and in particular a promotional service plan, when receiving a new eSIM for the CTN 130.

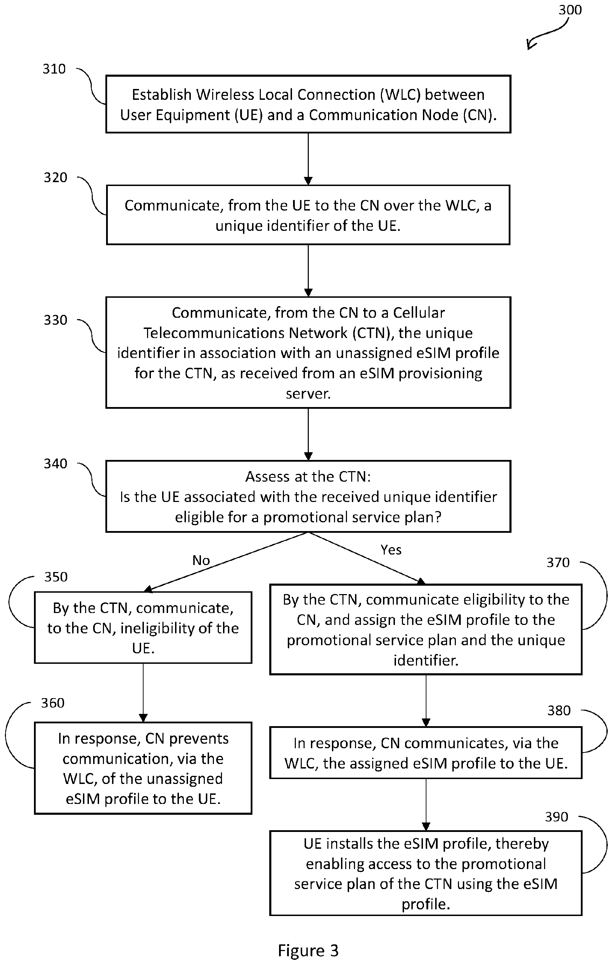

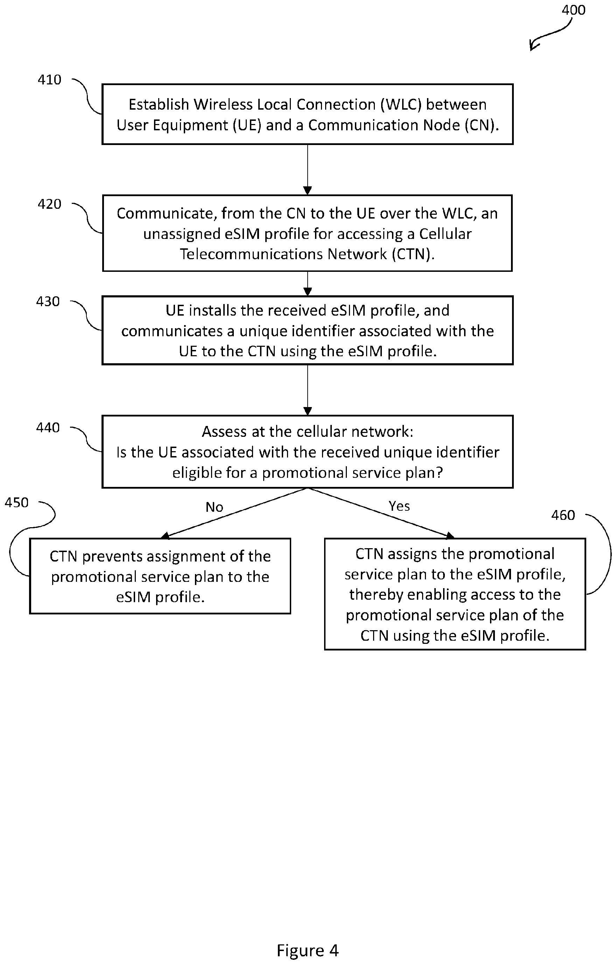

To do so, and as described in more detail with reference to Figures 3 and 4 below, when the CTN 130 provisions an eSIM profile with a service plan for the UE 110, the eSPEF 160 is configured to record in the database 170 the unique identifier associated with the UE, an identifier of the provisioned eSIM profile, and the corresponding service plan. In this way, the database records prior allocation of the service plan to the UE.

Subsequently, the eSPEF 160 is configured to determine whether or not the UE 110 is eligible for a requested service plan by applying eligibility rules against records stored in the database in association with the unique identifier of the UE. Exemplary eligibility rules for determining such eligibility comprise at least one of:
- determine that the UE is eligible when the unique identifier is:
   ∘ within a pre-defined period of time (*e*.*g*. a day, week, month or year ago or for all-time), not previously associated with a given service plan;
   ∘ previously associated with a given promotional service plan, but usage by the associated UE of the permitted network services is below a threshold (e.g. the UE did not consume any of a free data allowance); and
   ∘ previously associated with a promotional promotional service plan that is subsequently used to purchase a non-promotional service plan; and
- determining that the UE is ineligible when the unique identifier is:
   ∘ within a given period of time (*e*.*g*. within a day, week, month or year ago, or for all-time), previously associated with a given promotional service plan;
   ∘ associated with an in-use non-promotional service plan for the CTN 130; and
   ∘ blacklisted (*e*.*g*. the unique identifier is associated with a UE that has previously been found ineligible an excessive number of times within a pre-determined period of time).

The general principle of the eligibility rules is to determine the UE ineligible where there is suspected abuse in exploiting promotional service plans in an unfair or unintended manner, and is otherwise determined eligible, and more generally to prevent duplication of service plans for the same UE.

The ePS 140 is configured to create and store eSIM profiles in cooperation with the CTN 130, and to communicate eSIM profiles to the CN 120.

To do so, the ePS 140 is in communication with the core network 150 (or alternatively forms a part of said core network) so as to receive from the core network configuration data for generating an eSIM profile for the CTN 130. The configuration data includes, for example, an Integrated Circuit Card IDentifier (ICCID) and/or a network authentication key.

Once an eSIM profile is created at the ePS 140, the eSIM profile is stored in a secure database (not shown) within the ePS. The ePS 140 is also in communication with the CN so as to communicate eSIM profiles from the secure database to the CN 120.

The CN 120 is a telecommunications device that is configured to communicate with the UE 110 via a Wireless Local Connection (WLC) 180-1, and with the ePS 140 via a wide area network 180-2.

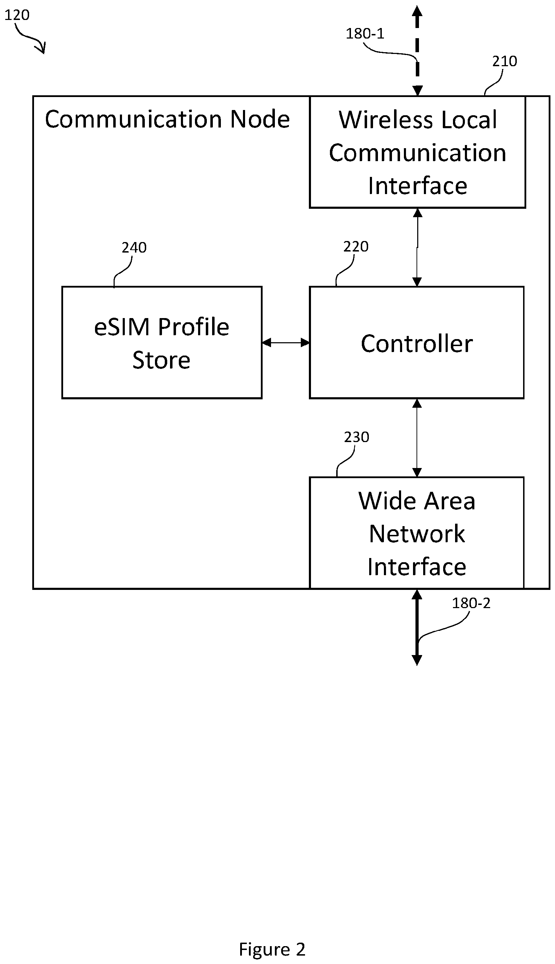

Figure 2 schematically shows the CN 120 in more detail, which comprises a/an: wireless local communication interface 210; controller 220; wide area network interface 230; and eSIM profile storage 240.

The controller 220 is communicatively connected to the wireless local communication interface 210 and the wide area network interface 230. The controller is configured to generate, process, route, and store data that is communicated using said interfaces. The controller is further connected to the eSIM profile store 240, which is a secure memory component configured securely to store eSIM profiles for retrieval, and onward communication, by the controller.

The wireless local communication interface 210 is configured to facilitate the WLC 180-1 with the UE 110. The WLC is a direct connection between the UE and CN and permits two-way communication. For example, the WLC is a wireless local area network (*e*.*g*. utilising Wi-Fi or Bluetooth) and/or a personal-area network (*e*.*g*. utilising Near-Field Communication).

By means of the wireless local communication interface 210, the CN 120 is capable of communicating to the UE 110 an unassigned eSIM profile (unassigned in the sense that no subscriber is yet associated with the eSIM profile) for installing by the UE for use as an eSIM, whereas the UE is configured to communicate the UE information to the CN.

The wide area network interface 230 is configured for two-way communication with the wide area network 180-2, which is in the form of a fixed-access network and/or the 130 (and/or another) CTN, and is configured to access a data network, including the Internet.

Using the wide area network interface 230, and via the wide area network 180-2, the CN is capable of communicating with the ePS 140, such that the former communicates a request for an unassigned eSIM profile to the latter, and the ePS 140 responds with an appropriate eSIM profile to the CN 120. Correspondingly, the CN is capable of communicating with the CTN 130 (and in particular with the eSPEF 160), so as to send the UE information (and, in particular, the unique identifier) to the CTN.

In one example, the CN 120 is in the form of, or is comprised within, a/an: digital advertisement billboard; public telephone kiosk or other public telecommunications device, such as the "*Street Hub*" as provided by *British Telecommunications pic;* connected vehicle, and in particular a rental or ride-share vehicle; tablet or portable computing device, such as one associated with sales or support personnel acting for, or on behalf of, the MNO.

In a specific example, the CN 120 is a digital advertisement billboard provided at an international travel facility (*e*.*g*. port, bus terminal, train station and/or airport) and/or a vehicle for international travel or travellers (*e*.*g*. car, bus, ship, hovercraft, aircraft or train), where it may be expected that users are arriving from abroad, and to a destination at which such users may not have access to any local (home and/or visited) CTNs. As such, the advertisement billboard is configured to advertise to users a capability to receive, at the UE 110, an eSIM profile with a promotional service plan for the CTN 130 by communicating with the CN 120 via the WLC 180-1. Accordingly, for users, there may be provided a convenient method of favourably obtaining access to the CTN 130, and for the MNO, users may be converted to new network subscribers.

However, as established above, a user may seek to acquire multiple eSIM profiles from the CN 120, each with a promotional service plan, and therefore to circumvent the limited basis on which promotional service plans may be offered by the MNO. Furthermore, preventing such abuse is made more difficult where an upfront free service plan is provided, since no identifying information in the form of user and/or payment details may be obtained.

By means of the aforementioned components of the system 100, as described in more detail below with reference to the exemplary processes 300, 400 of Figures 3 and 4, the system 100 is configured to provide the UE 110 with an eSIM profile permitting access to the CTN 130 in accordance with a promotional service plan only upon confirming that the UE is eligible for such a promotional service plan, and is not exploiting the distribution of promotional service plans.

In a first exemplary process 300 described with reference to Figure 3, at a first step 310, a user operates the UE 110 to connect said UE with the CN 120 via the WLC 180-1. For example, where the wireless local communication interface 210 is an NFC interface, and the UE comprises a corresponding interface, the UE is placed into proximity with the CN so as to establish the WLC as an NFC. At this stage 310, the UE may not have access to any CTNs, nor any wide area network (*e*.*g*. as may the case for international travellers at an airport).

At a next step 320, using the WLC 180-1, the CN 120 retrieves from the UE 110, at least, the unique identifier; this is performed by using an appropriate script or command that is intelligible and processable by an application, operating system and/or chipset of the UE to cause retrieval and communication of said identifier by the CN via the WLC. The unique identifier is subsequently stored by the controller 220 for onward communication.

At a next step 330, the CN 120 retrieves, at the controller 220 and from the eSIM profile store 240, an unassigned eSIM profile previously communicated to the CN from the ePS 140.

The CN 120 communicates the received unique identifier, in association with an identifier of the retrieved eSIM profile, to the CTN 130, and specifically to the eSPEF 160, using the wide area network interface 230 (and an appropriate core network gateway and/or API, for example). As part of said communication, the CN requests the retrieved eSIM profile to be assigned to the UE along with a promotional service plan.

At a next step 340, the eSPEF 160 performs a sub-process to assess eligibility of the UE 110 to receive the promotional service plan by interrogating the database 170 to identify records of prior allocation of the requested, or another, promotional service plan in association with the unique identifier, and subsequently applying the eligibility rules (for example, as described above) to the identified records. The sub-process determines that the UE 110 is either eligible or ineligible.

For example, the records of the prior allocation comprise: a count of instances of prior allocation; a time associated with prior allocation (commencement, end, and/or duration); details of the permitted network services, cost, and/or restrictions associated with the prior allocated promotional service plan; and details of usage of said network services; and/or UE context data.

In the event that application of the eligibility rules to the records of the prior allocation determine that the UE 110 is ineligible, then the process 300 proceeds to step 350 in which case the eSPEF 160 communicates a disproval, or otherwise withholds communication of an approval, to the CN 120. The eSPEF records the request for the promotional service plan, in association with the unique identifier, in the database 170. At a next step 360, in response to the disproval, or without an approval within a pre-determined period of time, the controller 220 prevents onwards communication of the retrieved eSIM profile to the UE 110 via the WLC 180-1. Accordingly, at termination of step 360 the UE does not receive the eSIM profile.

In the event that application of the eligibility rules to the records of prior allocation determine that the UE is eligible, then the process 300 instead proceeds to step 370 in which case the eSPEF 160 assigns the eSIM profile to the unique identifier, and therefore to the UE 110, and grants the eSIM profile access to the promotional service plan (*e.g.* by appropriately configuring the HSS); in this way, the eSIM profile is now assigned to the UE. The eSPEF 160 records the unique identifier in the database 170 thereby to create an associated records of prior allocation for the requested promotional service plan and the assigned eSIM profile.

Furthermore, the eSPEF 160 communicates an approval to the CN 120 confirming eligibility of the UE 110 to receive the now-assigned eSIM profile. In response, at a next step 380, the controller 220 communicates the now-assigned eSIM profile to the UE 110 through the WLC 180-1. Once the eSIM profile has been successfully communicated to the UE 110, the eSIM profile is deleted from the eSIM profile store to prevent re-use.

Accordingly, at a subsequent step 390, the UE 110 utilises the eSIM profile, by appropriately installing said profile, and is available to utilise the permitted network services from the CTN 130 in accordance with the associated promotional service plan.

Turning to a second exemplary process 400 described with reference to Figure 4, a first step 410 of said process corresponds with step 310 of process 300.

At a next step 420, an unassigned eSIM profile (having previously been received from the ePS 140) is communicated from the eSIM profile store 240 to the UE 110 in a manner corresponding to step 320.

At a subsequent step 430, the UE 110 installs the received eSIM profile, thereby enabling access to the CTN 130, but not to network services (since no service plan is yet allocated to the eSIM profile). The UE 110 then performs a registration process with the CTN 130 by connecting to the radio access point 140 using the cellular connection 145. As part of the registration process, the UE communicates, in association with the configuration data of the eSIM profile, the unique identifier directly to the CTN. The registration process effectively assigns the eSIM profile to the UE, and associates the eSIM profile with the unique identifier. The CTN communicates (via the wide area network 180-2) the assignment of the eSIM profile to the CN 120, which subsequently deletes the eSIM profile from the eSIM profile store 240 to prevent re-use.

Following initial registration of the eSIM profile, at a subsequent step 440, the unique identifier is communicated to the eSPEF 160, and the eSPEF performs a sub-process to assess eligibility of the UE to receive a promotional service plan in a manner corresponding to step 340.

In the event that the UE 110 is determined ineligible for the promotional service plan, then the process 400 proceeds to step 450, in which case the eSPEF 160 prevents allocation of the promotional service plan to the eSIM profile, thereby denying the UE access to the promotional service plan. In this example, the CTN is available to notify (*e*.*g*. via SMS) the UE that said UE is deemed ineligible for the requested promotional service plan.

In the event that the UE 110 determined eligible for the promotional service plan, then the process 400 proceeds to step 460, in which case the eSPEF 160 allocates the promotional service plan to the eSIM profile (*e*.*g*. by appropriately configuring the HSS). The eSPEF records the unique identifier in the database 170 thereby to create an associated record of prior allocation for the promotional service plan now associated with the eSIM profile.

In contrast to process 300, the unassigned eSIM profile is communicated by the CN 120 to the UE 110 upfront, prior to the CTN 130 assessing eligibility of the UE for the promotional service plan. Whilst doing so may prove wasteful in the event that the UE is deemed ineligible, the ensuing processing is made simpler and/or more effective given that the UE is capable of more richly communicating directly with the CTN 130 by virtue of having the eSIM profile.

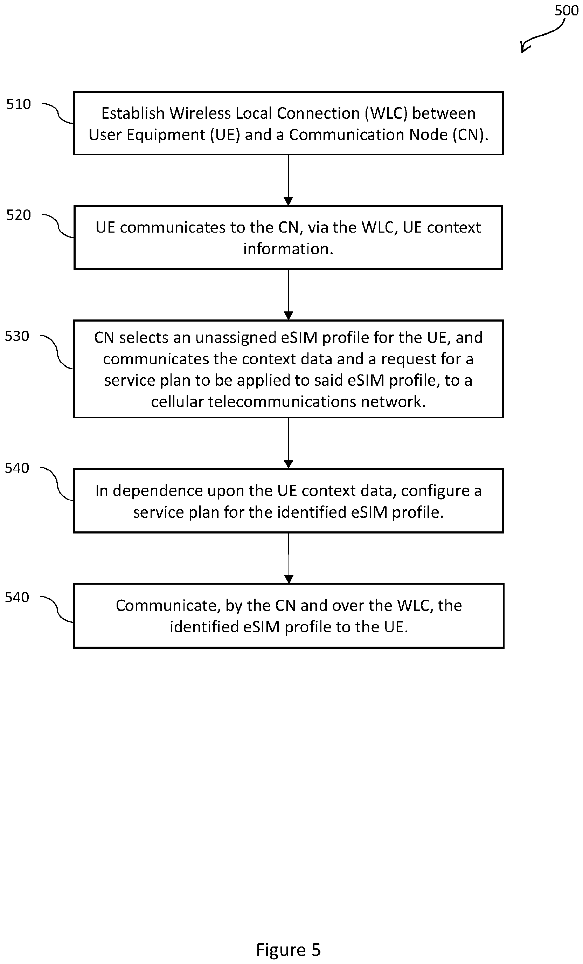

Figure 5 shows an example of an alternative, or additional, process 500 of operating the system 100. The process 500 is performed so as to configure a service plan responsively to UE context data. In this way, an allocated service plan is informed by contextual and situational information of the UE. Doing so may help automatically provide more appropriate service plans for UE, thereby helping improving user experience and/or network resource utilisation (*e*.*g*. by preventing wasteful over-allocation of network services and allowances and/or allocation of incompatible network services).

Process 500 is performed with the UE 110 deemed eligible to receive a service plan, whether deemed so according to the performance of process 300 or 400 described above, or otherwise.

In a first step 510, the UE 110 and CN 120 establish the WLC 180-1; this step is available to correspond with steps 310 and 410.

At a next step 520, via the WLC 180-1, the CN 120 requests from the UE 110 a specified set of UE context data, and the UE responds by retrieving and communicating, via the WLC, the specified UE context data.

In a specific example, the UE context data comprises a certificate verifying that the UE comprises an authorised use account for a given network resource (or otherwise user credentials that permit the CN to verify the same via an operator of said network resource). In a yet more specific example, the network resource is a secure user account associated with an application running on the UE, provided by an airline carrier, such as for purchasing and managing travel bookings with the airline, accessing details for travel bookings, and storing and managing airline rewards.

Additionally or alternatively, the UE context data comprises model information of the UE hardware, and in particular of a cellular chipset.

In a next step 530, the CN 120 identifies, from the eSIM profile store 240, an unassigned eSIM profile for the UE 110, and communicates to the CTN 130, and in particular to the eSPEF 160, using the wide area network interface 180-2 (and an appropriate core network gateway and/or API, for example), an identifier of the selected eSIM profile, a request for a service plan for the identified eSIM profile, and the UE context data. It will be appreciated that at this stage, the identified eSIM profile may or may not be communicated from the CN 120 to the UE 110.

At a next step 540, in response to the receiving the request for the service plan, the eSPEF 160 performs an operation to configure the requested service plan in dependence upon the received UE context data by using configuration rules. The operation applies the configuration rules to the received UE context data so as to select the permitted network service, cost and restrictions that are to form the service plan.

In the example described above where the UE context data comprises the certificate for the network resource provided by the airline carrier, the configuration rules provide for the service plan to be configured as a free service plan (*i*.*e*. at no cost) with mobile data and voice call network services permitted, for 2 hours, within a pre-defined geographical area proximate to an airport (*e*.*g*. by using appropriate Access Control Lists and/or network slice allocation and deployment), and for accessing internet domains and telephone numbers only associated with a predefined whitelist (*e*.*g*. the airline carrier itself, and partner services, such as accommodation and other transport services).

Further exemplary configurations of service plans, derived by appropriate configuration rules based on a given set of UE context data, are provided below, providing:
- a promotional service plan where the UE context data is (*e.g.* an IMSI) an indication that the UE is a subscriber of another, pre-defined, CTN (such as a partner CTN of the CTN 130);
- a promotional service plan where the UE context data indicates that the UE is within a predefined area, such as at an event sponsored by the CNT;
- a more restricted network service (*e*.*g*. a lower allowance of data, and/or lower throughput) in response to receiving UE context data comprising measurements of cellular radio congestion form the UE that indicate high local radio congestion;
- cost-free mobile data with low throughput, text and/or calls where the UE context data is a battery reading of the UE, and said reading indicates a low battery status;
- network technologies only up to the extent that such technologies are compatible with identified hardware of the UE; and
- Voice-over-Wi-Fi (VoWiFi) in response to identifying the UE to be connected to a pre-defined Wi-Fi network.

Regardless of the specific configuration of the service plan, at a next step 540, the identified eSIM profile is communicated, by the CN 120 and over the WLC 180-1, to the UE 110. By appropriately installing the received eSIM profile, the UE is configured to access the CTN, using the configured service plan that is - from the outset, and prior to the UE even connecting with the CTN - informed by the UE context data.

It will be appreciated that process 500 is available to be combined with process 300 or 400, such that eligibility for a promotional service plan is performed as per process 300 or 400, and, where a UE is deemed eligible, the promotional service plan is then configured as per process 500.

### Alternatives and Modifications

In an alternative example of processes 300 and 400, upon determining that the UE is ineligible for the requested promotional service plan, the CTN is available instead to provide an alternative promotional service plan, and in particular a more restrictive promotional service plan, such as merely to permit subsequent acquisition by the UE of a non-promotional service plan.

It will be appreciated that processes 300 and 400 are available alternatively to be performed in respect of non-promotional service plans. If the UE 110 is permitted to receive multiple eSIM profiles offering the same non-promotional service plan, this may be an unintended duplication of expenditure for the associated user, and therefore a source of grievance for said user. Accordingly, processes 300 and 400 are available to be performed, for example, such that the eligibility rule help prevent double-acquisition of such service plans by deeming the UE ineligible to receive a further eSIM profile with a non-promotional service plan if the UE is already associated with another eSIM profile having a (optionally, identical) non-promotional service plan.

In an alternative to process 300, the eSIM profile is communicated to the UE 100 regardless of whether the UE is determined eligible or ineligible, and said communication is therefore available to be performed at any step, and the unique identifier of the communicated eSIM (*e.g.* IMSI) is communicated by the CN 120 to the eSPEF 160. Upon determining that the UE is ineligible, as per step 350, the eSPEF is configured (*e*.*g*. in interaction with the HSS) not to allocate a promotional service plan to the eSIM profile, such that access to the CTN using the eSIM instead requires a subscriber to purchase a non-promotional service plan. This process thereby permits a more efficient path towards subscription (in that the UE is already a subscriber of the CTN by virtue of the already-communicated eSIM profile), but may waste resources in generating and communicating eSIM profiles where they remain unused.

In an alternative, operations relating to communication of an unassigned eSIM profile (in association with the unique identifier, as appropriate) to the eSPEF 160 so as to permit assignment to the UE and access to the requested promotional service plan, are additionally or alternatively performed by, or via, the ePS 140.

In an alternative, the CN 120 comprises a payment terminal, and in particular utilising NFC and the WLC 180-1. In this way, the CN is available to take payment details from the UE by accessing an electronic wallet stored thereupon, so as subsequently to provide the UE with access to a service plan. The cost of the service plan is communicated by the CTN 130 to the CN.

In one embodiment, the system and/or its components or subsystems can include computing devices, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a telecommunications system, the method comprising the steps of:
providing a Communication Node (CN) configured to:
store an embedded Subscriber Identification Module (eSIM) profile for accessing a Cellular Telecommunications Network (CTN); and
communicate with a User Equipment (UE) over a wireless local connection;
communicating, from the CN, to the UE, over the wireless local connection, the eSIM profile;
receiving, at the CTN, from the UE using the eSIM profile, a/an:
request for a service plan;
identifier of the communicated eSIM profile; and
unique identifier associated with UE, other than the identifier of the eSIM profile;
determining, at the CTN, the UE to be:
eligible to receive the service plan in response to identifying, as stored in the CTN,
an absence of an association between the unique identifier with prior provision of the requested service plan by the CTN; and
ineligible to receive the service plan in response to identifying, as stored in the CTN, an association between the unique identifier and prior provision of the
requested service plan; and
in response to determining that the UE is:
eligible, the CTN permitting the identified eSIM profile to access to the requested service plan; and
not eligible, the CTN preventing the identified eSIM profile from accessing to the requested service plan.

2. A method of operating a telecommunications system, the method comprising the steps of:
providing a Communication Node (CN) configured to:
communicate with a Cellular Telecommunications Network (CTN);
store an embedded Subscriber Identification Module (eSIM) profile for accessing the CTN; and
communicate with a User Equipment (UE) using a wireless local connection;
receiving, at the CN, from the UE, over the wireless local connection, a unique identifier associated with UE;
communicating, by the CN to the CTN:
a request for a service plan;
an identifier of the stored eSIM profile; and
the received unique identifier;
determining, at the CTN, the UE to be:
eligible to receive the service plan in response to identifying, as stored by the CTN,
an absence of an association between the unique identifier with prior provision of the requested service plan by the CTN; and
ineligible to receive the service plan in response to identifying, as stored by the CTN, an association between the unique identifier and prior provision of the
requested service plan; and
in response to determining that the UE is:
eligible:
the CTN permitting the identified eSIM profile to access to the requested service plan; and
communicating, by the CN to the UE, via the wireless local connection, the
identified eSIM profile; and
ineligible:
the CTN preventing the identified eSIM profile from accessing the requested service plan; and/or
preventing the CN from communicating the identified eSIM profile to UE.

3. A method according to Claim 1 or 2, wherein, in response to determining that the UE is eligible, the CTN communicating said eligibility to the CN.

4. A method according to any preceding claim, wherein the prior provision of the requested service plan is within a predefined period of time.

5. A method according to any preceding claim, wherein, in response to determining that the UE is eligible and/or permitting the identified eSIM profile access to the requested service plan, the CTN subsequently storing an association between the unique identifier and the requested service plan as prior provision of said service plan.

6. A method according to any preceding claim, wherein the service plan is a promotional service plan.

7. A method according to any preceding claim, further comprising the step of the CN requesting, and subsequently receiving, the eSIM profile from an eSIM server, said server being configured to configure and provide the eSIM profile.

8. A method according to any preceding claim, further comprising the steps of:
communicating, from the UE to the CN over the wireless local connection, context data associated with the UE, in which said context data is indicative of a state of the UE and/or
a user associated with the UE;
communicating, by the CN to the CTN, the context data; and
the CTN configuring the requested service plan in dependence upon the context data.

9. A computer-readable carrier medium comprising a computer program, which, when the computer program is executed by a computer, causes the computer to carry out the steps of any one of the preceding claims.

10. A telecommunications system comprising a:
Cellular Telecommunications Network (CTN); and
Communication Node (CN) configured to:
store an embedded Subscriber Identification Module (eSIM) profile for accessing the Cellular Telecommunications Network (CTN); and
communicate with a User Equipment (UE) over a wireless local connection so as to send the eSIM profile to the UE; and
wherein the CTN is configured to:
receive, from the UE using the eSIM profile, a/an:
request for a service plan;
identifier of the communicated eSIM profile; and
unique identifier associated with UE, other than the identifier of the eSIM profile; and
determine, the UE to be:
eligible to receive the requested service plan in response to identifying, as stored in the CTN, an absence of an association between the unique identifier with prior provision of the requested service plan by the CTN; and
ineligible to receive the service plan in response to identifying, as stored in the CTN, an association between the unique identifier and prior provision of the requested service plan; and
in response to determining that the UE is:
eligible, permit the identified eSIM profile to access to the requested service plan; and
not eligible, prevent the identified eSIM profile from accessing to the requested service plan.

11. A telecommunications system comprising a:
Cellular Telecommunications Network (CTN); and
Communication Node (CN) configured to:
store an embedded Subscriber Identification Module (eSIM) profile for accessing the CTN;
communicate with the Cellular Telecommunications Network (CTN); and
communicate with a User Equipment (UE) using a wireless local connection;
wherein said system is configured to:
receive, from the UE, at the CN, and over the wireless local connection, a unique identifier associated with UE;
communicate, by the CN to the CTN:
a request for a service plan;
an identifier of the stored eSIM profile; and
the received unique identifier;
determine, at the CTN, the UE to be:
eligible to receive the requested service plan in response to identifying, as stored by the CTN, an absence of an association between the unique identifier with prior provision of the requested service plan by the CTN; and
ineligible to receive the service plan in response to identifying, as stored by the CTN, an association between the unique identifier and prior provision of the requested service plan; and
in response to determining that the UE is:
eligible:
the CTN being configured to permit the identified eSIM profile to access to the requested service plan; and
the CN being configured to communicate, to the UE, via the
wireless local connection, the identified eSIM profile; and ineligible:
the CTN being configured to prevent the identified eSIM profile from accessing the requested service plan; and/or
the CN being configured to prevent communication of the identified eSIM profile to UE.
